# FASCICULE DE BREVET EUROPEEN

(11) **EP 1 528 284 B1**
(45) Date de publication et mention de la délivrance du brevet: **15.02.2012**
(21) Numéro de dépôt: 04292479.5
(22) Date de dépôt: 19.10.2004
(51) Int. Cl.: F16G 5/20

(54) **Courroie nervurée de transmission de puissance**
Rippentreibriemen
Ribbed driving belt

(30) Priorité: 24.10.2003 FR 0312456
(43) Date de publication de la demande: 04.05.2005
(73) Titulaire: HUTCHINSON, 75008 Paris (FR)
(72) Inventeur: Varin, Hervé, 37300 Joue-les-Tours (FR); Bourdeau, Willy, 41000 Villebarou (FR)
(74) Mandataire: Jacquard, Philippe Jean-Luc

(56) Documents cités:
- EP-A- 0 633 408
- WO-A-03/062666
- US-A- 4 647 278
- US-A- 4 904 232
- US-A- 4 931 118
- US-A- 5 026 327
- US-A1- 2003 180 516
- US-B1- 6 176 799
- PATENT ABSTRACTS OF JAPAN vol. 015, no. 336 (M-1151), 26 août 1991 (1991-08-26) -& JP 03 129147 A (BANDO CHEM IND LTD), 3 juin 1991 (1991-06-03)

## Description

La présente invention concerne une courroie nervurée de transmission de puissance présentant des nervures en V, c'est-à-dire une courroie dite « Poly-V », et plus particulièrement une courroie dont les nervures présentent des faces latérales droites et un sommet de forme arrondie, notamment circulaire.

Une telle courroie a été proposée dans le Brevet des Etats-Unis US 4,047,446. Dans ce Brevet, le sommet des nervures est arrondi de manière à assurer des distances égales 52 et 53 entre le sommet 43 des gorges 44 de poulie et le fond 45 rainures 40 d'une part et entre le sommet 50 des nervures 35 de la courroie et le fond 51 des gorges 44 de poulie, dans le but d'éviter des mises en contact préjudiciables entre la courroie et la poulie au fur et à mesure de l'usure de la courroie. Cette courroie présente une hauteur de dents importante et est très sensible aux contraintes de flexion/compression.

Le Brevet des Etats-Unis US 4,904,232 a proposé, dans le but d'éviter les craquelures apparaissant dans la denture des courroies de transmission de puissance en raison des contraintes de flexion et de contreflexion, de mettre en oeuvre une denture dont le sommet présente un profil circulaire, le sommet étant réalisé en un élastomère de dureté Shore A inférieure à celle du reste de la denture.

Une telle mise en oeuvre présente l'inconvénient de compliquer notablement la fabrication de la courroie.

Le Brevet des Etats-Unis US 5,803,855 a proposé d'améliorer le contact entre la courroie et la poulie en ménageant des rainures ("clearance spaces") entre les nervures adjacentes et en mettant en oeuvre des surfaces de contact non linéaires, ce qui réduirait les concentrations de contraintes en sommet de courroie et les craquelures des nervures. Dans cette courroie, le sommet peut être en forme d'arc de cercle qui se raccorde aux faces latérales non planes.

Ce type de courroie n'est pas facile à mettre en oeuvre notamment en raison du profil non plan des surfaces de contact qui doit être conçu de manière à assurer une bonne transmission de puissance et de la présence des rainures entre les nervures.

La présente invention a pour objet une courroie qui permette d'éviter au moins dans une large mesure les phénomènes de craquelures apparaissant dans le sommet des dents, par exemple dans un véhicule automobile (voiture, moto, ...), tout en évitant les inconvénients des antériorités précitées.

De manière surprenante, la Société Demanderesse a mis en évidence que l'apparition des craquelures en sommet de dent n'était pas susceptible de se produire seulement dans le cas où la courroie était soumise à des cycles de flexion/contreflexion.

Elle a ainsi mis en évidence qu'il existait un autre phénomène, non identifié jusqu'à présent, qui est le gonflement de la zone libre de contact en sommet de dent, qui est dû à la tension de la courroie et au diamètre de l'enroulement, et qui génère des déformations en particulier sur les bords de contact et qui peuvent conduire à l'apparition de craquelures. Ce phénomène tend à devenir prépondérant pour de faibles diamètres d'enroulement (par exemple inférieurs à 60 mm comme on en rencontre sur les poulies d'alternateur). De tels faibles diamètres sont souvent présents sur les cinématiques d'automobiles.

Le Brevet des Etats-Unis US 4,944,717 propose pour améliorer le problème de flexion contreflexion des courroies en V à flancs plats, de ménager un sommet de dent de forme concave. Cependant, un tel profil est défavorable du point de vue des déformations de gonflement car il induit un maximum complémentaire de déformations en sommet de dent.

Par ailleurs, il a été suggéré de reprendre en rectification le sommet plat des dents qui vient de moulage de manière à usiner un sommet plat qui se raccorde directement ou par des rayons de courbure faibles (0,6 mm ou moins) avec les faces latérales. Ceci permet d'éliminer la couche superficielle plate venant de moulage, qui est plus fragile, mais au prix d'une étape supplémentaire de rectification. Ce profil à hauteur réduite est sensible aux déformations de gonflement provoquées par la mise en tension, ces déformations dépendant également du diamètre de l'enroulement d'où l'apparition de craquelures dues à ce défaut qui n'avait pas été identifié auparavant.

En d'autres termes, les solutions de l'Art Antérieur conduisent à une amélioration du comportement de la courroie vis-à-vis des phénomènes flexion/contreflexion, mais ceci s'accompagne en général d'une détérioration du comportement vis-à-vis des déformations de gonflement.

L'objet de l'invention est une courroie qui permette d'améliorer la tenue au gonflement générateur de craquelures du sommet des nervures.

Dans ce but, l'invention a pour objet une courroie de transmission de puissance notamment destinée à un véhicule automobile selon les termes de la revendication 1.

Le profil curviligne du sommet des dents, venu de préférence de moulage, mais qui peut également être obtenu par usinage permet, dans la gamme de rayons de courbure spécifié d'éviter des concentrations de déformations préjudiciables et améliorer notablement le comportement vis-à-vis des concentrations de déformations de gonflement par rapport à un sommet plat venu de moulage.

Ledit rayon de courbure, par exemple le rayon d'un cercle constituant ledit sommet des nervures est supérieur à 1 mm, et notamment à 1,1 mm, et inférieur ou égal à 1,5 mm. Il peut être compris entre 1,05 mm et 1,45 mm, notamment entre 1,1 mm et 1,3 mm et plus particulièrement entre 1,15 mm et 1,25 mm.

La longueur I des faces latérales planes, prise entre leur raccordement au fond de nervure et ledit sommet est comprise entre 0,7 mm et 1,8 mm, notamment entre 0,8 mm et 1, 7 mm, et plus particulièrement comprise entre 1 mm et 1,5 mm et de préférence entre 1,08 mm et 1,36 mm.

La hauteur H des nervures est comprise entre 1,8 mm et 2,4 mm, notamment entre 1,9 mm et 2,3 mm et plus particulièrement entre 2 mm et 2,2 mm.

De manière préférentielle, le profil curviligne est tangent aux faces latérales, en ses points de raccordement aux dites faces latérales.

Les nervures en V peuvent venir de moulage. Alternativement, au moins le sommet des nervures en V est usiné.

D'autres caractéristiques et avantages de l'invention apparaîtront mieux à la lecture de la description ci-après, en liaison avec les dessins dans lesquels :
- les figures 1a à 1d représentent en coupe quatre modes de réalisation d'un profil de nervure pour une courroie de type K selon l'invention,
- la figure 2 représente une courroie selon l'invention montée sur une poulie,
- la figure 3 représente une courroie selon un mode de réalisation préféré de l'invention.
   Sur les dessins les valeurs numériques, à savoir pour r, R, I, P, H₀ et H, sont en millimètres.
- la figure 4 illustre la comparaison des déformations de gonflement à la surface (peau) des dents sur la zone libre pour une poulie de 45 mm de diamètre à une tension de 120 N/dent/brin pour trois courroies selon l'invention, une selon la figure 1d (courbe I), une selon les figures 1b et 3 (courbe II) et enfin, une selon la figure 1a (courbe III), en comparaison avec une courroie de l'art antérieur, présentant des faces latérales plates usinées (courbe IV).
- et la figure 5 illustre la longueur L (en mm) des flans des dents en contact avec la poulie en fonction de la tension de la courroie en N/dent/brin pour les trois courroies précitées (courbes I à III respectivement).

Les profils actuels de courroies à nervures en V sont adaptés aux normes de poulies telle que ISO 9981 spécifiant notamment les angles (40°), le pas 3,56 mm par exemple pour un profil K et avec des rayons de creux de nervure ou dent et un sommet de nervure parfaitement définis.

Les constructeurs de courroies, malgré ces contraintes sur les poulies, ont une liberté de conception du profil de courroie pour obtenir une transmission de puissance par adhérence, avec la meilleure durée de vie possible.

La transmission de puissance demande une aptitude de la courroie à entraîner un ou plusieurs accessoires sans glissement excessif durant toute sa durée de vie, et ce sans défaillance. Cette contrainte de fonctionnement est en partie liée aux surfaces de contact en appui sur les gorges de poulie sous l'effet de la tension nécessaire au non glissement.

La fin de la vie d'une courroie se signale en particulier par l'apparition de craquelures sur la denture en son sommet provoquée par les flexions et contreflexions sur la denture données par le passage alterné sur des poulies et/ou sur des pièces non striées. La denture travaille en alternance en traction/compression, lorsque par exemple le système de transmission comporte une poulie de retournement avec laquelle le dos de la courroie est en contact. Cette fatigue alternée provoque les craquelures.

De plus, ainsi que l'a identifié la Société Demanderesse, cette apparition de craquelures est aussi provoquée par le gonflement de la zone libre de contact en sommet de dent, générant des déformations en particulier au voisinage du raccordement des contacts, qui peuvent conduire également à des craquelures.

Différentes formes de profil ont été proposées dans le but notamment de réduire les effets induits par les flexions/contreflexions. Les profils à hauteur réduite ont permis d'apporter une amélioration essentiellement sur les contraintes de flexion/contreflexion. Tous ces profils présentent des zones libres constituées par des sommets de dent plats raccordés aux zones de contact (faces latérales plates) avec le profil de poulie, ce raccordement s'effectuant ou non avec des rayons.

Pour ces formes tronquées connues classiques, la mise en tension et l'enroulement provoquent une déformation importante de ces zones libres par gonflement. Les déformations générées conduisent à l'apparition de craquelures en sommet de dents. Ces déformations de gonflement sont plus importantes que les déformations de flexion/contreflexion. De la sorte, ces profils ne permettent pas de résoudre véritablement le problème de la durée de vie, mais seulement de diminuer l'effet induit par les déformations de flexion/contreflexion.

Selon l'invention, la forme complètement rayonnée se raccordant aux faces latérales plates permet d'obtenir un gonflement homogène sous l'effet de la tension. De plus, ces déformations de gonflement qui, dans les profils classiques sont maximales au voisinage du raccordement entre le sommet des dents et les faces latérales plates sont diminuées par cette forme incurvée.

Pour une hauteur de dent définie, la perte de contact géométrique à l'état libre est compensée par la déformation du rayon sous l'effet de la tension de la courroie et de l'enroulement. En première approximation, la surface de contact reste équivalente. Ceci permet d'assurer un niveau de transmission équivalent aux courroies connues.

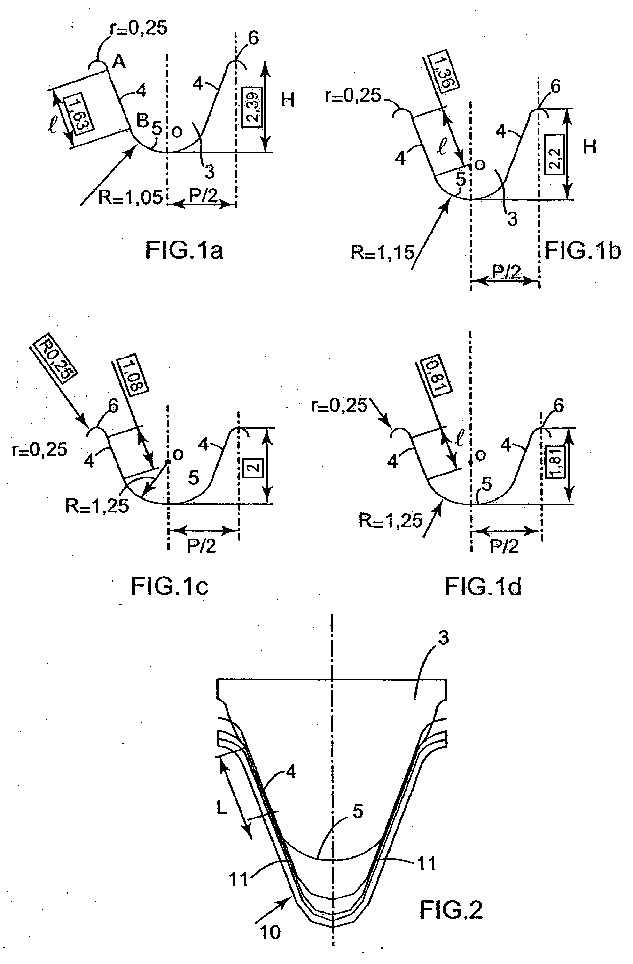

Les figures 1a à 1d représentent en coupe quatre profils de nervures 3 pour une courroie moulée de type K selon l'invention, pour un pas P de 3,56 mm et un angle α égal à 40°. Le sommet des dents est réalisé dans le même élastomère que le reste de la denture.

Ces nervures sont caractérisées par leur hauteur H prise entre le fond de dent et le sommet de dent. Le fond de nervure ou dent 6 est arrondi avec un rayon r de 0,25 mm. Il se raccorde à des faces latérales plates 4, ce qui, en coupe transversale de la courroie, donne un segment de droite AB de longueur I qui s'étend entre son raccordement au point A au fond de dent 6 et son raccordement au point B au somment de dent convexe 5. Aux figures 1a à 1d, le sommet 5 des dents est en coupe en arc de cercle de centre 0 situé sur l'axe des nervures 6 et de rayon R.

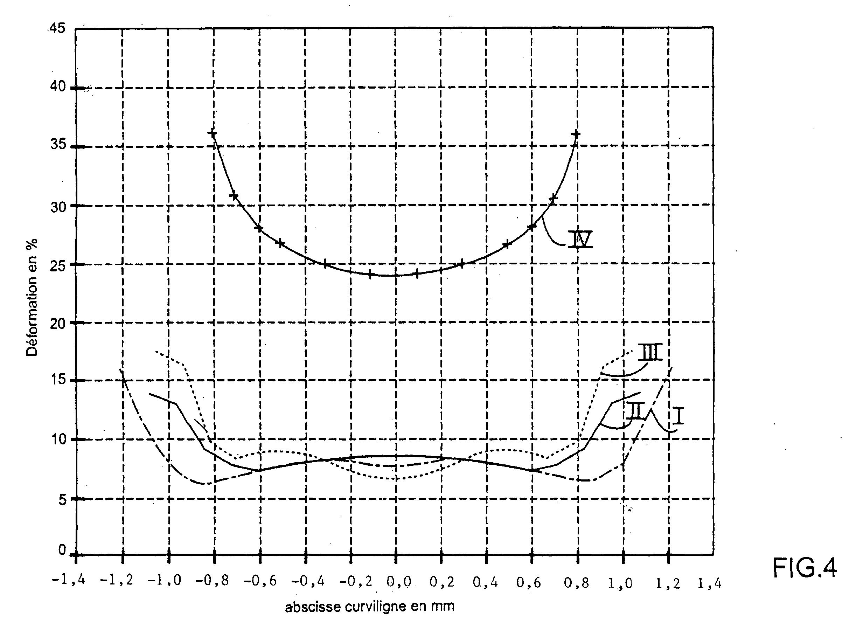

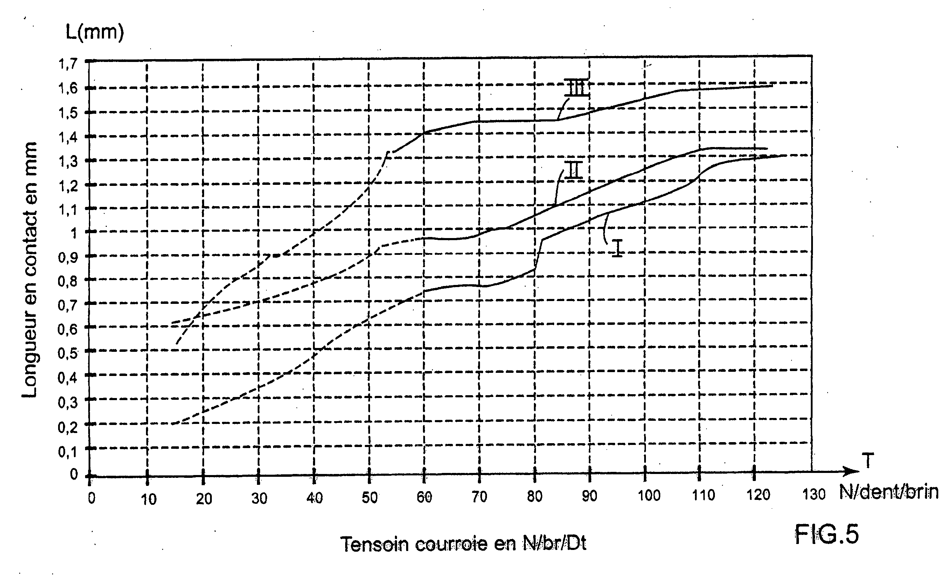

A la figure 1a, on a R = 1,05 mm, I = 1,63 mm et H = 2,39 mm (courbe III des figures 4 et 5).

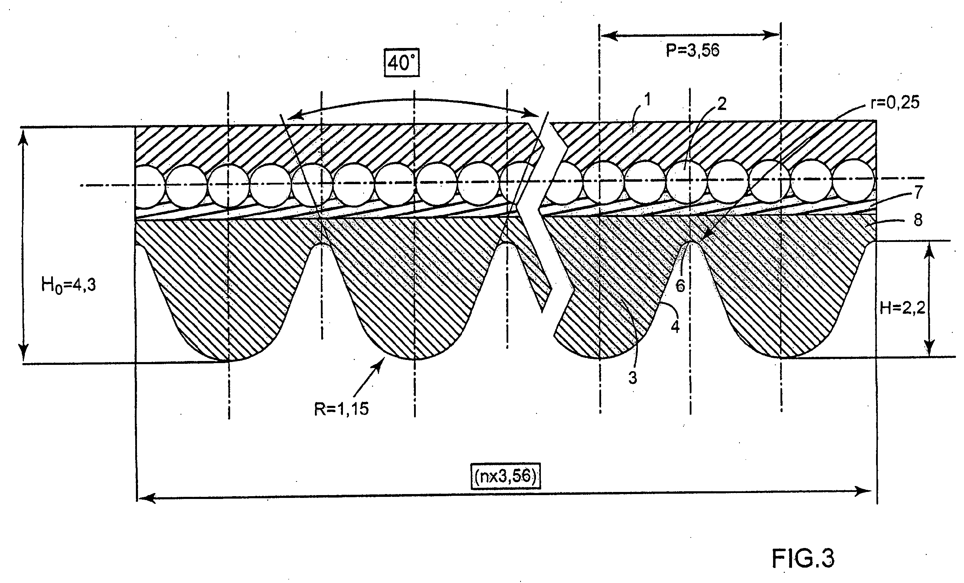

A la figure 1b et à la figure 3, on a R = 1,15 mm, I = 1,36 mm et H = 2,2 mm (courbe II des figures 4 et 5).

A la figure 1c, on a R = 1,25 mm, I = 1,08 mm et H = 2 mm.

A la figure 1d, on a R = 1,35 mm, I = 0,81 mm et H = 1,81 mm (courbe I des figures 4 et 5).

Les deux profils préférés sont ceux des figures 1b et 1c car ils associent des performances de haut niveau du point de vue des déformations de gonflement et de flexion/contreflexion avec une hauteur de dent assurant une transmission de puissance élevée.

A titre d'exemple, d'autres profils de nervures peuvent être mis en oeuvre, avec notamment :
R = 1,1 mm, I = 1,5 mm et H = 2,3 mm ;
R=1,2mm, I=1,22mm et H=2,1 mm ;
R = 1,3 mm, I = 0,95 mm et H = 1, 9 mm.

A la figure 4, on voit que pour les courbes I et III correspondant à des hauteurs H de 1,81 mm et 2,39 mm, la déformation maximale (entre 16 et 17 %) est plus importante que pour une hauteur H de 2,2 mm. Au-delà d'une hauteur H de 2,4 mm, la déformation de compression est plus élevée. Elle est beaucoup plus élevée pour les courroies de l'Art Antérieur à faces latérales usinées (courbe IV).

Tous les profils décrits ci-dessus présentent toutefois des performances satisfaisantes du point de vue des contraintes de gonflement et de flexion/contreflexion.

En pratique, pour une courroie de type K, le pas P peut être compris entre 3,5 mm et 3,62 mm, l'angle α entre les flans plats 4 peut être compris entre 36° et 44° et le rayon r peut être inférieur à 0,25 mm (avec une valeur minimale de 0,1 mm).

Bien que des profils circulaires aient été décrits, ceux-ci peuvent être approximés par des profils paraboliques, elliptiques, etc... de même courbure moyenne.

La réduction de la hauteur des dents est favorable du point de vue des contraintes de flexion/contreflexion, et elle s'accompagne d'une augmentation du rayon R et de la largeur de la région convexe 5 de sommet de dent qui est favorable du point de vue des déformations de gonflement. La figure 2 illustre la position qu'occupe la courroie pour une tension donnée (par exemple 120 N/nervure/brin).

La figure 5 montre la longueur de contact L en fonction de la tension T (en N/dent/brin) pour les trois courroies précitées. La courroie de hauteur 1,8 mm (courbe I) présente une longueur de contact L suffisante pour une transmission de puissance. La courroie de hauteur 2,2 mm (courbe II) constitue un bon compromis entre le niveau de déformation (figure 4) et la longueur de contact L. La courroie de hauteur 2,4 mm présente une longueur L plus grande, mais aux dépends par rapport à la courbe II du niveau de la déformation de gonflement.

On voit que l'on peut obtenir une longueur de contact L>I, la tension de la courroie venant plaquer une partie du sommet 5 dans la gorge 11 de la poulie 10, d'où un phénomène de compensation. On ne peut cependant trop diminuer la hauteur H, car I diminue également, et la longueur L tend à devenir insuffisante.

La figure 3 montre en coupe une courroie de type K (pas P de 3,56 mm) correspondant au mode de réalisation de la figure 1b. Elle comporte de manière classique un corps de courroie 1 en matériau élastomère par exemple caoutchouc polychloroprène, EPDM, caoutchouc hydrogéné butadiène nitrile, etc..., une deuxième couche 7 sur laquelle est enroulé en spirale, ici à spires conjointes, un câblé 2 de renforcement par exemple en polyamide 4.6, 6 ou 6.6 ou en polyester, et enfin une couche 8 en matériau élastomère par exemple caoutchouc polychloroprène, EPDM, caoutchouc hydrogéné butadiène nitrile qui comporte n nervures 3. La hauteur totale Ho de la courroie est ici de 4,3 mm, la hauteur H des dents étant de 2,2 mm.

La mesure des nervures peut être effectuée sans coupe de la courroie avec un appareil standard dénommé "CONTOUROGRAPH" ou bien après coupe nette d'une tranche de courroie sur un vidéomètre ou un projecteur de profil.

## Revendications

1. Courroie de transmission de puissance notamment destinée à un véhicule automobile et présentant au moins des nervures en V ayant des faces latérales plates (4) et un sommet (5) arrondi présentant un profil curviligne convexe ayant un rayon de courbure moyen supérieur à 1 mm et inférieur ou égal à 1,5 mm, **caractérisée en ce que** ledit sommet est réalisé dans le même élastomère que le reste de la denture (5), **en ce que** la longueur l des faces latérales plates (4), prise entre leur raccordement au fond de dents et ledit sommet est comprise entre 0,7 mm et 1,8 mm et **en ce que** la hauteur H des nervures est comprise entre 1,8 mm et 2,4 mm.

2. Courroie selon la revendication 1, **caractérisée en ce que** ledit rayon de courbure est compris entre 1,05 mm et 1,45 mm.

3. Courroie selon la revendication 2, **caractérisée en ce que** ledit rayon de courbure est compris entre 1,1 mm et 1,3 mm, et plus particulièrement entre 1,15 mm et 1,25 mm.

4. Courroie selon une des revendications 1 à 3, **caractérisée en ce que** ledit profil curviligne est un cercle dont le rayon est égal au dit rayon de courbure.

5. Courroie selon une des revendications précédentes, **caractérisée en ce que** la longueur I est comprise entre 0,8 mm et 1,7 mm.

6. Courroie selon la revendication 5, **caractérisée en ce que** la longueur l est sensiblement comprise entre 1 mm et 1,5 mm, et plus particulièrement entre 1,08 mm et 1,36 mm.

7. Courroie selon une des revendications précédentes, **caractérisée en ce que** la hauteur H des nervures, est comprise entre 1,9 mm et 2,3 mm, et plus particulièrement entre 2 mm et 2,2 mm.

8. Courroie selon une des revendications 1 ou 2, **caractérisée que** le rayon de courbure est sensiblement égal à 1,15 mm, en ce que la hauteur H de nervure (3) est sensiblement égale à 2,2 mm et en ce que la longueur l des faces latérales plates (4) est sensiblement égale à 1,35 mm.

9. Courroie selon une des revendications précédentes, **caractérisée en ce que** le profil curviligne est tangent aux faces latérales en ses points de raccordement auxdites faces latérales.

10. Courroie selon une des revendications précédentes, **caractérisée en ce qu'**elle est de type K.

11. Courroie selon une des revendications précédentes, **caractérisée en ce que** les nervures (3) en V viennent de moulage.

12. Courroie selon une des revendications 1 à 10, **caractérisée en ce qu'**au moins le sommet des nervures (3) en V est usiné.

## Claims

1. A power transmission belt, in particular for a motor vehicle and presenting at least V-ribs having flat side faces (4) and rounded ridges (5) presenting a convex curvilinear profile having a mean radius of curvature greater than 1 mm and less than or equal to 1.5 mm, the belt being **characterized in that** said ridges (5) are made of the same elastomer as the rest of the teeth, **in that** the length ℓ of the flat side faces (4) measured between their connections with the bottoms of the teeth and with said ridges lies in the range 0.7 mm to 1.8 mm, and **in that** the height H of the ribs lies in the range 1.8 mm to 2.4 mm.

2. A belt according to claim 1, **characterized in that** said range of curvature lies in the range 1.05 mm to 1.45 mm.

3. A belt according to claim 2, **characterized in that** said range of curvature lies in the range 1.1 mm to 1.3 mm, and more particularly in the range 1.15 mm to 1.25 mm.

4. A belt according to any one of claims 1 to 3, **characterized in that** said curvilinear profile is a circle of radius equal to said radius of curvature.

5. A belt according to any preceding claim, **characterized in that** the length ℓ lies in the range 0.8 mm to 1.7 mm.

6. A belt according to claim 5, **characterized in that** the length ℓ lies substantially in the range 1 mm to 1.5 mm, and more particularly in the range 1.08 mm to 1.36 mm.

7. A belt according to any preceding claim, **characterized in that** the height H of the ribs lies in the range 1.9 mm to 2.3 mm, and more particularly in the range 2 mm to 2.2 mm.

8. A belt according to claim 1 or claim 2, **characterized in that** the radius of curvature is substantially equal to 1.15 mm, **in that** the rib height H is substantially equal to 2.2 mm, and **in that** the length ℓ of the flat side faces (4) is substantially equal to 1.35 mm.

9. A belt according to any preceding claim, **characterized in that** the curvilinear profile is tangential to the side faces at its points of connection with said side faces.

10. A belt according to any preceding claim, **characterized in that** it is of the K type.

11. A belt according to any preceding claim, **characterized in that** the V-ribs (3) are obtained by molding.

12. A belt according to any one of claims 1 to 10, **characterized in that** at least the ridges of the V-ribs (3) are machined.

## Patentansprüche

1. Riemen zur Leistungsübertragung, der insbesondere für ein Kraftfahrzeug bestimmt ist und wenigstens V-förmige Rippen mit ebenen Seitenflächen (4) und einer abgerundeten Spitze (5), die ein gekrümmtes konvexes Profil mit einem mittleren Krümmungsradius größer als 1 mm und kleiner als oder gleich 1,5 mm aufweist, umfasst, **dadurch gekennzeichnet, dass** die Spitze (5) aus dem gleichen Elastomer wie die restliche Verzahnung ausgebildet ist, dass die Länge I der ebenen Seitenflächen (4), zwischen ihrer Verbindung mit dem Zahngrund und der Spitze, im Bereich zwischen 0,7 mm und 1,8 mm liegt und dass die Höhe H der Rippen zwischen 1,8 mm und 2,4 mm beträgt.

2. Riemen nach Anspruch 1, **dadurch gekennzeichnet, dass** der Krümmungsradius zwischen 1,05 mm und 1,45 mm beträgt.

3. Riemen nach Anspruch 2, **dadurch gekennzeichnet, dass** der Krümmungsradius zwischen 1,1 mm und 1,3 mm und insbesondere zwischen 1,15 mm und 1,25 mm beträgt.

4. Riemen nach einem der Ansprüche 1 bis 3, **dadurch gekennzeichnet, dass** das gekrümmte Profil ein Kreis ist, dessen Radius gleich dem Krümmungsradius ist.

5. Riemen nach einem der vorstehenden Ansprüche, **dadurch gekennzeichnet, dass** die Länge I zwischen 0,8 mm und 1,7 mm beträgt.

6. Riemen nach Anspruch 5, **dadurch gekennzeichnet, dass** die Länge I im Wesentlichen zwischen 1 mm und 1,5 mm und insbesondere zwischen 1,08 mm und 1,36 mm liegt.

7. Riemen nach einem der vorstehenden Ansprüche, **dadurch gekennzeichnet, dass** die Höhe H der Rippen zwischen 1,9 mm und 2,3 mm und insbesondere zwischen 2 mm und 2,2 mm beträgt.

8. Riemen nach einem der Ansprüche 1 oder 2, **dadurch gekennzeichnet, dass** der Krümmungsradius im Wesentlichen gleich 1,15 mm beträgt, dass die Höhe H einer Rippe (3) im Wesentlichen gleich 2,2 mm beträgt und dass die Länge l der ebenen Seitenflächen (4) im Wesentlichen gleich 1,35 mm beträgt.

9. Riemen nach einem der vorstehenden Ansprüche, **dadurch gekennzeichnet, dass** das gekrümmte Profil an seinen Verbindungsstellen mit den Seitenflächen zu den Seitenflächen tangential ist.

10. Riemen nach einem der vorstehenden Ansprüche, **dadurch gekennzeichnet, dass** er vom K-Typ ist.

11. Riemen nach einem der vorstehenden Ansprüche, **dadurch gekennzeichnet, dass** die V-förmigen Rippen (3) aus einem Stück geformt werden.

12. Riemen nach einem der Ansprüche 1 bis 10, **dadurch gekennzeichnet, dass** wenigstens die Spitze der V-förmigen Rippen (3) bearbeitet ist.
